# EUROPEAN PATENT APPLICATION

(11) **EP 2 990 914 A1**
(43) Date of publication of application: **02.03.2016**
(21) Application number: 15180487.9
(22) Date of filing: 11.08.2015
(51) Int. Cl.: G06F 3/041, G06F 3/043

(54) **USER INTERACTION WITH AN APPARATUS USING A LOCATION SENSOR AND MICROPHONE SIGNAL(S)**

(30) Priority: 14.08.2014 US 201414459747
(71) Applicant: Nokia Technologies Oy, 02610 Espoo (FI)
(72) Inventor: VILERMO, Miikka, 37200 Siuro (FI); OZCAN, Koray, Farnborough, GU14 9XF (GB)
(74) Representative: Nokia Corporation

(57) **Abstract**

An apparatus includes one or more location sensors configured to output one or more signals and one or more microphones configured to form corresponding microphone signals. The apparatus also includes one or more processors configured to cause the apparatus to perform at least the following: determination, using the one or more signals from the one or more location sensors, of a direction of at least one object relative to the apparatus; recognition, by the apparatus using a signal from a microphone in the apparatus, of one or more attributes of an acoustic signal made by the at least one object; and causation of an operation to be performed by the apparatus in response to the direction and the recognized one or more attributes being determined to correspond to the operation. Additional apparatus, methods, and program products are also disclosed.

## Description

### TECHNICAL FIELD

This invention relates generally to apparatus such as electronic or mobile devices and, more specifically, relates to user interaction with the apparatus.

### BACKGROUND

This section is intended to provide a background or context to the invention that is recited in the claims. The description herein may include concepts that could be pursued, but are not necessarily ones that have been previously conceived, implemented or described. Therefore, unless otherwise indicated herein, what is described in this section is not prior art to the description and claims in this application and is not admitted to be prior art by inclusion in this section.

Mobile devices are becoming more prevalent, smaller, and varied. For instance, smart phones and tablets have become ubiquitous. Recently, smart glasses, smart watches, and like have become popular and are becoming even more popular. Each of these varied mobile devices has to have some interface with which a user can communicate. That is, a user needs the mobile device (or an application on the device) to perform some function, and the interface for the device is the way the user commands the device to perform the function.

Many user interfaces are dominated by touch, such as through gestures on a touch screen or via user interaction with physical buttons or other elements. However, these touch-based interface elements are not always easy to access. As an example, if a user is walking or jogging and using a smart watch or a smart phone, the user has to access the watch or phone, find the touch-based interface element, and interact with the element in a certain way. This sequence of events could interrupt the walk or jog, or could at the least cause some amount of aggravation on the part of the user.

It would be beneficial to improve user interaction with mobile devices such as smart phones, tablets, smart glasses, or smart watches.

### BRIEF DESCRIPTION OF THE DRAWINGS

The foregoing and other aspects of embodiments of this invention are made more evident in the following Detailed Description of Exemplary Embodiments, when read in conjunction with the attached Drawing Figures, wherein:
FIG. 1 shows a block diagram of an apparatus, e.g., a mobile device (a smart phone) suitable for practicing the exemplary embodiments of the instant invention;
FIG. 2 illustrates a mobile device being tapped by a finger of a user;
FIG. 3 illustrates a mobile device being touched by a finger of a user;
FIG. 4 illustrates a user making a sound near but not touching a mobile device;
FIG. 5 is performed by an apparatus such as a mobile device to provide user interaction with the mobile device using a location sensor and microphone signal and is a block diagram of an exemplary logic flow diagram that illustrates the operation of an exemplary method, a result of execution of computer program instructions embodied on a computer readable memory, and/or functions performed by logic implemented in hardware, in accordance with exemplary embodiments herein;
FIG. 6 illustrates a user making a sound near but not touching a mobile device;
FIG. 7 is a block diagram of an example using a combination of touch and sound, and is an exemplary logic flow diagram that illustrates the operation of an exemplary method, a result of execution of computer program instructions embodied on a computer readable memory, and/or functions performed by logic implemented in hardware, in accordance with exemplary embodiments herein;
FIG. 8 is an example database that has a location attribute for touch and peak energy for audio.

### SUMMARY

In an exemplary embodiment, an apparatus includes one or more location sensors configured to output one or more signals and one or more microphones configured to form corresponding microphone signals. The apparatus also includes one or more processors configured to cause the apparatus to perform at least the following: determination, using the one or more signals from the one or more location sensors, of a direction of at least one object relative to the apparatus; recognition, by the apparatus using a signal from a microphone in the apparatus, of one or more attributes of an acoustic signal made by the at least one object; and causation of an operation to be performed by the apparatus in response to the direction and the recognized one or more attributes being determined to correspond to the operation.

In another exemplary embodiment, an apparatus includes means for sensing a location and for outputting corresponding one or more signals and means for sensing audio configured to form corresponding audio signals. The apparatus also includes the following: means for determining, using the one or more signals from the means for sensing a location, a direction of at least one object relative to the apparatus; means for recognizing, by the apparatus using a signal from the means for sensing audio in the apparatus, one or more attributes of an acoustic signal made by the at least one object; and means for causing an operation to be performed by the apparatus in response to the direction and the recognized one or more attributes being determined to correspond to the operation.

An exemplary computer program product includes a computer-readable storage medium bearing computer program code embodied therein for use with a computer. The computer program code includes: code for determining, using one or more signals from one or more location sensors of an apparatus, a direction of at least one object relative to the apparatus; code for recognizing, by the apparatus using a signal from a microphone in the apparatus, one or more attributes of an acoustic signal made by the at least one object; and code for causing an operation to be performed by the apparatus in response to the direction and the recognized one or more attributes being determined to correspond to the operation.

In a further exemplary embodiment, a method comprises the following: determining, using one or more signals from one or more location sensors of an apparatus, a direction of at least one object relative to the apparatus; recognizing, by the apparatus using a signal from a microphone in the apparatus, one or more attributes of an acoustic signal made by the at least one object; and causing an operation to be performed by the apparatus in response to the direction and the recognized one or more attributes being determined to correspond to the operation.

### DETAILED DESCRIPTION OF THE DRAWINGS

As stated above, it would be beneficial to improve user interaction with mobile devices such as smart phones, tablets, smart glasses, or smart watches. The number of different ways people interact with their devices grows daily. Some of the reasons are, for example, the following: the growing size of the devices makes normal one-handed operation difficult; the devices are taken along for an increasing amount of activities like jogging or snowboarding; and the emergence of wearable computing devices such as smart glasses and smart watches that are worn and not carried requires mobile device makers to invent new ways to interact with mobile devices.

Such devices include different sensors so that a user can interact with the mobile device. For instance, touch sensors are readily available in most mobile devices (where "mobile" indicates a user can carry and easily move the device). A touch sensor relies on touch of a fingertip of a user to determine the location of a fingertip. Hover sensors are relatively new sensors that allow locations of fingers of a user (or other objects) to be determined, without the user touching a hover sensor or the device. Both touch and hover sensors may be integrated with or placed near a display such as a touch screen. Touch and hover sensors may be considered location sensors, as they can determine locations of, e.g., a hand or fingers of a user and other objects.

Hover sensors are good at detecting directions where a user hand is located. However, hover sensors are not good at detecting exact moments when a user makes a sound event. A sound signal from the sound event detected by microphones can easily be used for detecting the exact moment of a user interaction.

There are currently several ways to interact with a device with directional sound commands. Typically, however, extra devices or accessories are required for detecting audio interactions with directions. The microphones built into a mobile device are seldom used.

Conventional methods use an accelerometer to determine if a tap has occurred, then uses the microphone to determine a direction of the tap. The drawback is that these methods use an accelerometer. Accelerometers can get confused with noisy signals that are typical, for instance, while running.

The inventors have realized that hover sensors are good at detecting directions where the user hand is located. However, hover sensors are not good at detecting exact moments when a user makes a sound event. Microphones can easily be used for detecting an exact moment of a user interaction, which is helpful in certain situations. In particular, if the intent is to control a game, it is beneficial to be able to time the control precisely (e.g., not to drive the game car off the road for example). Another example could be if the user is fast forwarding a song or a video, the moment when to stop fast forwarding and to return to normal speed is time critical for a good user experience. A hover sensor can be beneficial in case of user interactions where the device is not touched.

Consequently, a first exemplary solution herein, which uses a single microphone and is responsive to acoustic signals created by touching of the device by the user, avoids the above problems by detecting the direction of a sound using a hover sensor which detects, e.g., on which side of the device the user hand is. Also, in exemplary embodiments, the sound events are classified and recognized, which provides the user interaction extra flexibility and robustness against environmental sounds. A solution alternative to or in addition to using hover sensors is a solution that uses one or several touch sensors in place of the hover sensors. Touch sensors - like hover sensors - work better than accelerometers in situations like running.

Another potential drawback in conventional systems is that certain systems require touching the device (e.g., in order to effect the accelerometers) and in addition the accelerometers can get confused with noisy signals that are typical for example while running. A second exemplary solution herein, which uses a single microphone and is responsive to acoustic signals created without touching of the device by the user, avoids both these problems by detecting the moment of a sound from a microphone and the direction of the sound using a hover touch sensor, which detects, e.g., which side of the device the user hand is.

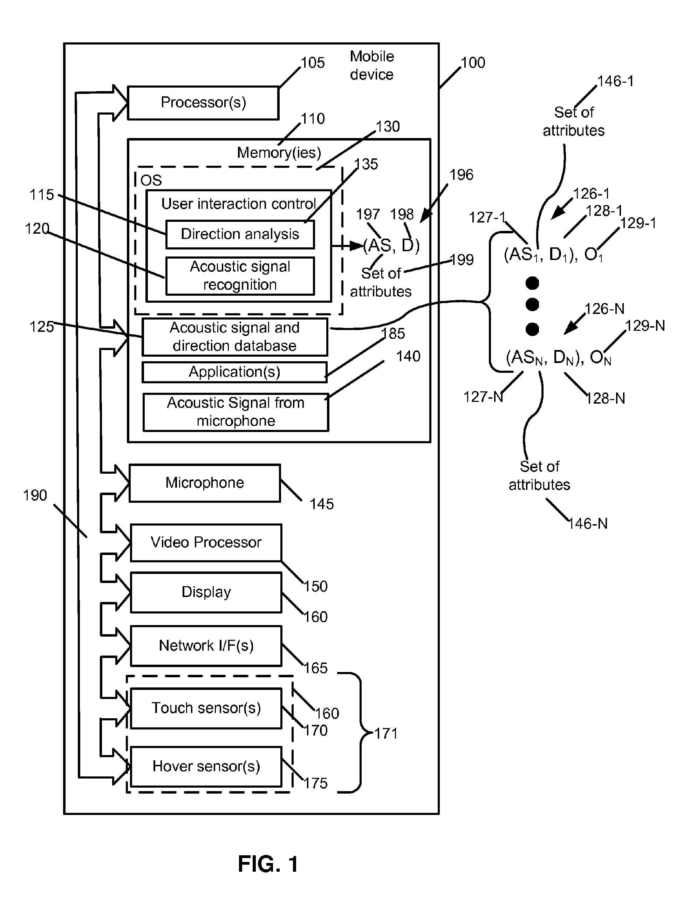

Additional details of exemplary solutions are presented after a description of an apparatus suitable for performing the exemplary embodiments is presented. Turning to FIG. 1, this figure shows a block diagram of an apparatus, in this example a mobile device 100, suitable for practicing the exemplary embodiments of the instant invention. Although a mobile device 100 is mainly described herein, the exemplary embodiments are applicable to other devices too. The mobile device 100 may be a mobile phone, tablet, wristwatch, pendant jewelry, ring, and the like. The mobile device 100 comprises one or more processors 105, one or more memories 110, a microphone 145, a video processor 150, a display 160, one or more network interfaces 165, location sensor(s) 171 such as one or more touch sensors 170 and one or more hover sensors 175. The one or more buses 190 interconnect the various elements of mobile device 100, and the one or more buses may be any element able to interconnect devices, such as traces on a motherboard, conductive runs in an integrated circuit, and the like. The one or more memories 110 comprise a user interaction control unit 135 (which comprises a direction analysis unit 115 and an acoustic signal recognition unit 120), a sound and direction database 125, one or more applications 185, and an acoustic signal 140 from the microphone 145. The user interaction control unit 135 may be part of an operating system (OS) 130 or may be separate therefrom. In an exemplary embodiment, the user interaction control unit 135 is computer program code that the one or more processors 105 can execute. The user interaction control unit 135, in an exemplary embodiment, controls (at least in part or completely) the mobile device to perform operations described herein. For instance, the one or more memories 110 and the computer program code are configured to, with the one or more processors 105, to cause the mobile device 100 to perform operations described herein. In another example, the user interaction control unit 135 may be implemented (at least in part or completely) in hardware, such as an integrated circuit.

In brief, a combination of a single microphone 145 and location sensor(s) 171 such as hover sensor 175 and/or touch sensor 170 and an acoustic signal classification system (e.g., via the acoustic signal recognition unit 120) is used to detect directional sound/touch commands in a way that the commands should not get confused with environmental sounds or random acceleration of the device. More specifically, the user interaction control unit 135 can access data from location sensors 171 such as the touch sensor(s) 170 and/or the hover sensor(s) 175. The direction analysis unit 115 performs an analysis to determine a direction (relative to the mobile device 100) of an object based on the data from the touch sensor(s) 170 and/or the hover sensor(s) 175 to determine an analyzed direction 198. The user interaction control unit 135 accesses the acoustic signal 140, which in this example is digital data from the microphone 145, and operates the acoustic signal recognition unit 120 to recognize an acoustic signal such as a sound or a vibration or both.

Acoustic signals 127 could be time or frequency domain signals from a particular sound, such as a tap on a side of the mobile device 100. However, the acoustic signal 127 could correspond to, e.g., a snap, tap, clap, hit, and these can contact the mobile device or not contact the mobile device, depending on the user actions. That is, the recognized acoustic signal 127 could be a gesture of a "tap" for instance and this might be used as a simple, shorthand way to characterize the signal. Additionally, the recognized acoustic signal 127 could be some type of representation used to distinguish between different user interactions. For instance, there could be several different recognized acoustic signals 127 such as "signal 1", "signal 2", and "signal 3", and as long as the signals correspond to different user actions and are distinguishable, then the mobile device 100 should be able to apply these recognized acoustic signals for user interaction. That is, there is no need for a recognized acoustic signal 127 (or 197) to be characterized as a gesture of a "tap", even if the recognized signal is a tap.

As stated above, acoustic signals 127 could be time or frequency domain signals from a particular sound, such as a tap on a side of the mobile device 100. Alternatively or additionally, the acoustic signals 127 could be processed into one or more attributes that are representative of the sound. For example, some parameters like LPC (linear predictive coding) coefficients could be used for a set of attributes 146, and these coefficients represent a frequency distribution of the acoustic signals 127. Processing may be performed by the acoustic signal recognition unit 120 to determine a set of attributes 199 that is then compared against the set of attributes 146 in the acoustic signal and direction database 125. As additional examples, the set of attributes 146 could be a sampling of a frequency distribution of the acoustic signal. Other possible attributes are described below. The sets of attributes 199, 146 can be used to determine what the acoustic signal 197, 127 is, for instance the "shorthand" of "tap". Alternatively, the sets of attributes 199, 146 can be compared directly, such that no "shorthand" is necessary. Thus, instead of recognizing that an acoustic signal 197 is a "tap" and looking for a "tap" in the recognized acoustic signals 127, the mobile device 100 could compare sets of attributes 199 and 146 to determine which operation 129 should be performed. The sets of attributes 146 themselves may never have an applied shorthand for gestures such as taps, hits, and the like, and instead the sets of attributes 146 would be used directly.

The recognized acoustic signal (AS) 197 and the analyzed direction (D) 198 form a pair 196. The acoustic signal and direction database 125 has a number of pairs 126 of acoustic signals (AS) 127 and directions (D) 128, where each of the pairs 126 correspond to an operation (O) 128. In this example, there are N pairs 126 and a corresponding number of operations 129, but this is not a requirement. For instance, there could be multiple pairs 126 assigned to a single operation 129, or multiple operations 129 assigned to a single pair 126, or other options. If there is a match between the acoustic signal 197 recognized by analysis of the acoustic signal 140 and the analyzed direction 198 with acoustic signals 127 and directions 128, respectively, such that a pair 126 is determined, the corresponding operation(s) 129 is performed.

The operations 129 may be performed by one or more of the applications 185. For instance, the operations 129 could be instructions to a music or video player (as an application 185), e.g., to pause, stop, or play the current media. Alternatively or additionally, the operations 129 maybe performed by the OS 130. As another example, the operations 129 could be to open (by the OS 130) a certain application, such as texting or email. Many other options are possible.

The video processor 150 processes information to be displayed on the display 160. The display 160 may be integrated with the touch sensor(s) 170 and/or the hover sensor(s) 175, or the touch sensor(s) 170 and/or the hover sensor(s) 175 may be separate from the display 160.

The one or more network interfaces 165 may be wired or wireless or both. Typically, a mobile device 100 operates at least with wireless network interfaces such as Bluetooth (a wireless technology standard for exchanging data over short distances), cellular interfaces, and the like.

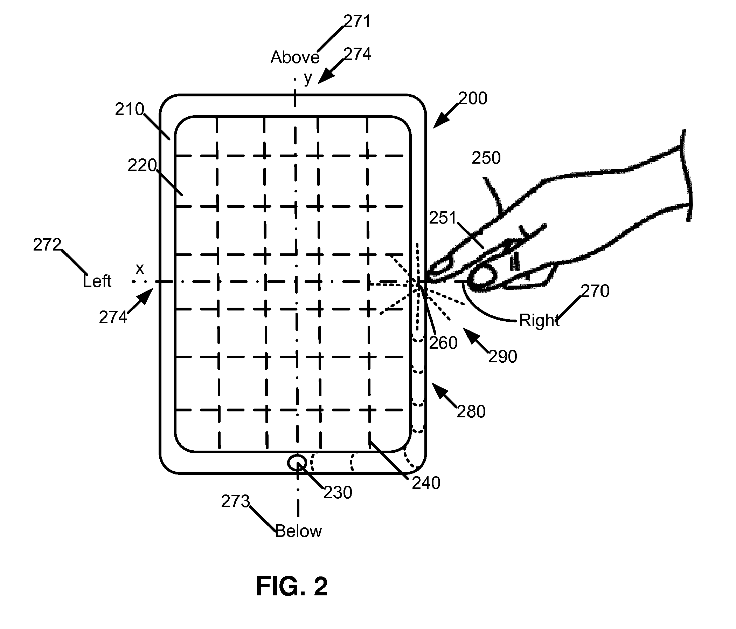

A first embodiment is a single microphone solution responsive to touch by a user of the mobile device 100. Turning to FIG. 2, this figure illustrates a mobile device 100 (a smart phone 200 in this example) being tapped by a finger 251 of a user and is an example of the first embodiment. The smart phone 200 includes a body 210 and a touch screen 220. The smart phone 200 includes a microphone area 230 where a microphone 145 is placed. A user touches (e.g., taps) the right side 270 of the body 210, at a location 260, and creates a sound as indicated by reference 290. The tap may also create a vibration, illustrated by reference 280, which passes through the body 210 to the microphone 145 in the microphone area 230. In this example, a hover sensor 175 is implemented as a hover sensor 240 implemented as a grid (which may also implement the touch sensor 170) and is formed, e.g., adjacent (e.g., behind) the screen 220.

In this first exemplary embodiment, a hover sensor 175/240 is used to detect the direction of location of movement of finger 251 of a user hand 250 with respect to the device 100/200. That is, whether the location of movement is, for instance, to the left side 272, right side 270, above 271 or below 273 the device. These locations are relative to an x-y coordinate system 274. Note that the locations can be used to locate a contact by an object on any part of the mobile device 100/200 or to locate a sound by the object where the object does not touch any part of the mobile device 100/200. In the example of FIG. 2, the location of movement is to the right side 270 of the device 200. A microphone 145 is used to detect the exact moment when the user touches the device. The touch creates an acoustic signal having both a sound 290 and a vibration 280, both of which reach the microphone 145 through the air (as vibrations of air molecules) and the body 210 (as vibration of the body material), respectively. The direction detected with the hover sensor 240 at the moment of the sound creation is combined with the acoustic signal to form an acoustic signal and direction pair 196. The acoustic signal and direction pair 196 is compared to a database 125 of acoustic signal and direction pairs 126. When a match is found, the device 100/200 may perform an operation 129 that has been associated to the pair 126. The association may have been performed by the device 100/200 or software maker or by the user himself or herself.

Touching the device 100/200 in different parts may cause significantly different acoustic signals reaching the microphone 145 due to the device 100/200 being made of different materials in different parts. Therefore, it can be beneficial to have a different acoustic signal and direction pair 126 for each touch location used on the device 100/200. When the user touches the device, the acoustic signal 140 picked up by the microphone 145 may be partly touch induced vibrations 280 and partly sound 290 that has traversed through air. However, from a recognition point of view, this is irrelevant, as sound and vibration signals and their pairs can be recognized similarly.

The user can teach the device 100/200 the acoustic signal and direction pairs and their associated operations so that when the device recognizes a certain sound/vibration with a direction, the device may perform an operation. For example if the user slaps the device on its right side, a music player (as an application 185) may skip to the next song in a playlist.

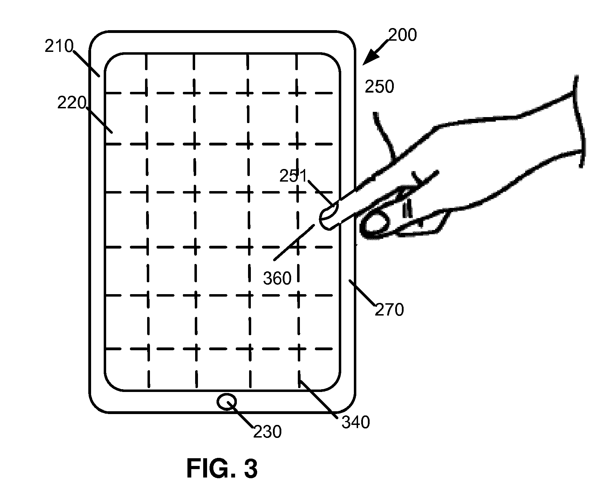

Instead of using a hover sensor 175, it is possible to use a touch sensor 170. Instead of detecting a direction as in the case with a hover sensor, the place where the touch sensor is touched is used. For instance, see FIG. 3, which illustrates a mobile device being touched by a finger of a user. The touch sensor 170 in this example is a grid and is illustrated as touch sensor 340, which is integrated with the touch screen 220. The finger 251 presses on the touch screen 220 at location 360. It is possible to equip the device 100/200 with multiple touch sensors 170 that are placed around the device. For example, if there is a touch sensor 170 in the front and in the back of the device, the device can detect if the touch is in the front or the back of the device and thus detect two different directions. With more touch sensors on different surfaces of the device, more directions can be detected. A touch sensor is good for detecting the moment of touch and normally a microphone would not be needed for that. However, the user might want to touch the device with different objects, such as the finger 251, a pencil, an eraser, a glove, and each makes a different sound. The microphone 145 can be used to detect an attribute sound made by the object that was used to touch the device. Another example is that the microphone can be used to detect if a watch was touched through a sleeve or directly.

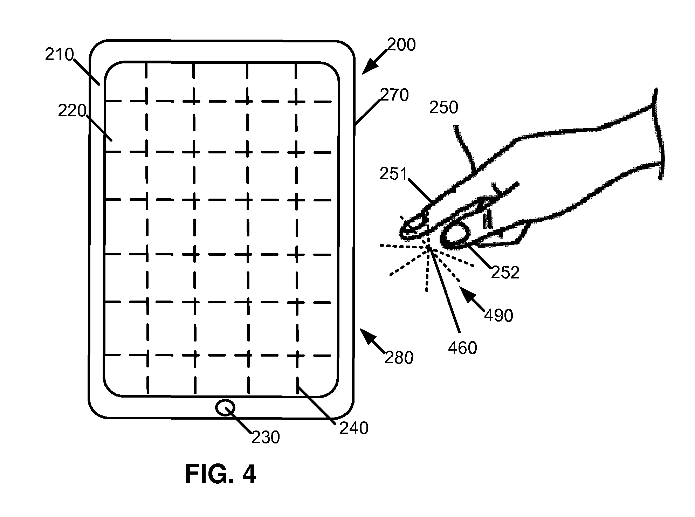

In a second embodiment, a single microphone solution is disclosed that is responsive to a user (or other object) not touching the device. FIG. 4 illustrates a user making a sound near but not touching a mobile device. For instance, the user could make a snapping sound 490 at location 460 with fingers 251 and 252 A hover sensor 240 may be used to detect the direction of the user hand with respect to the device. That is, if the hand is to the left side 272, right side 270, above 271 or below 273 the device 200. A microphone 145 (in microphone area 230) is used to detect the time when the user makes the sound 490. The sound 490 may come from for example snapping fingers, clapping hands, slapping an arm, a wrist or fingers with the other hand or with a pen, jingling keys, and the like. The direction detected with the hover sensor 240 at the moment of the sound 490 is combined with the sound 490 to form an acoustic signal and direction pair 196. The sound and direction pair 196 is compared to a database 125 of sound and direction pairs 126. When a match is found, the device may perform an operation 129 that has been associated to the pair 126. The association may have been performed by the device or software maker or by the user himself or herself.

For instance, the user can teach the device acoustic signal and direction pairs 126 and their associated operations 129 so that when the device 100/200 recognizes a certain sound with a certain direction, the device 100/200 may perform an operation. For example if the user snaps his fingers to the right of a device, a music player may skip to the next song in a playlist.

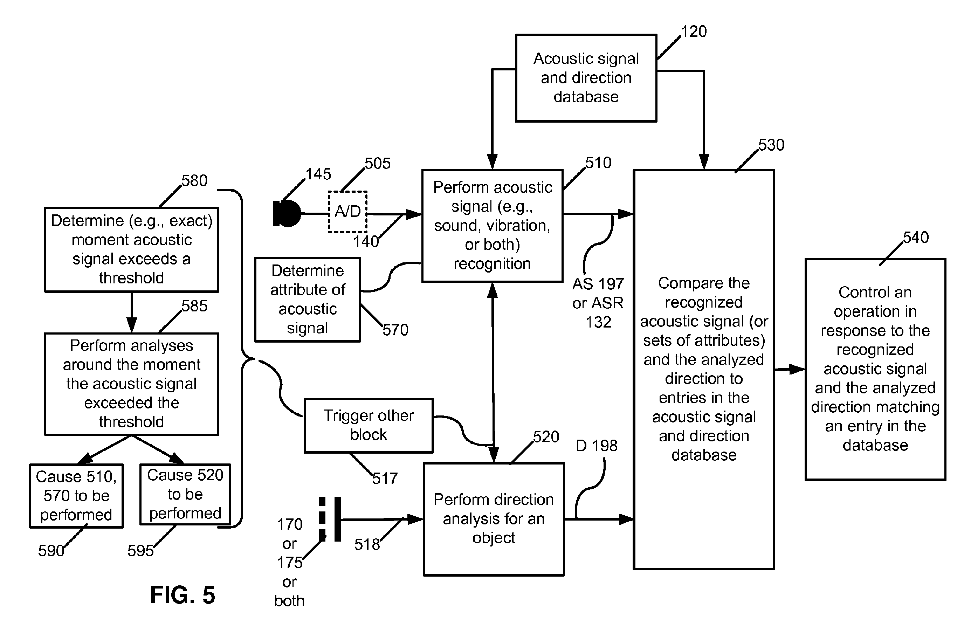

Turning to FIG. 5, this figure is performed by an apparatus such as a mobile device to provide user interaction with the mobile device using a location sensor and microphone signal. This figure is a block diagram of an exemplary logic flow diagram that illustrates the operation of an exemplary method, a result of execution of computer program instructions embodied on a computer readable memory, and/or functions performed by logic implemented in hardware, in accordance with exemplary embodiments herein. The blocks in the figure may be considered to be means for performing the function in the blocks. Furthermore, each block in FIG. 5 may be implemented as a module, such as a circuit or other hardware, for performing the function in the block. For instance, block 510 may be a module such as circuitry that performs acoustic signal recognition. As another example, block 520 may be a module that compares the recognized signal acoustic signal and the analyzed direction. The blocks in FIG. 5 may be an exemplary implementation of user interaction control unit 135. Thus, a mobile device 100/200, e.g., under control of the user interaction control unit 135, performs the blocks in FIG. 5.

In block 510, the mobile device 100/200 performs acoustic signal recognition using an acoustic signal 140 from the microphone 145 to determine an acoustic signal AS 197 or a set of attributes 199. Note that an analog to digital (A/D) converter 505 may be used to convert the analog microphone signal 145 to a digital signal that represents the acoustic signal 140. The acoustic signal 140 may be a sound, vibrations, or both. Acoustic signal recognition could be performed, e.g., using techniques described in, for instance, U.S. Patent No. 8,195,455 and Heittola et al., "Sound Event Detection in Multisource Environments Using Source Separation", Workshop on Machine Listening in Multisource Environments (CHiME 2011), Florence, Italy, 2011, pp. 36-40.

Block 510 may include an operation to determine (block 570) an attribute of an acoustic signal 140, such as a sound. For instance, in the Heittola et al. article, they use feature extraction for sounds in audio signals, then use the extracted features for classification. Such features may be attributes of sound that can subsequently be used to compare with attributes from a previously determined set of sounds (or vibrations or both) in order to perform recognition (block 510) of the sound (or vibrations or both). Another possible example of an attribute of an acoustic signal is timbre of the signal. Timbre is an attribute of sensation in terms of which a listener can judge that two sounds having the same loudness and pitch are dissimilar. Timbre may be a single number or multiple numbers for an acoustic signal 140. For instance, in Lopes et al., "Augmenting Touch Interaction through Acoustic Sensing", ACM (2011), they determine a timbre cue, which is a vector with 11 elements from magnitudes of discrete Fourier transforms (DFTs) applied to corresponding 11 narrow band filters for a signal. They also determine an intensity cue that is a peak amplitude of the same signal analyzed through an envelope follower. Such timbre and intensity cues are also possible attributes of sound that might be used herein.

In block 520, the mobile device 100/200 performs direction analysis for an object using a signal or signals 518 from location sensor(s) 171 such as the touch sensor 170, the hover sensor 175, or both. The direction analysis determines a direction D 198. Typically, the location sensor 171 directly tells the location. That is, a hover sensor 175 on the back of the device could indicate a signal while a hover sensor 175 on the front of the device does not. Similarly, a grid sensor would have a specific output (corresponding to the grid) and thus a location might be immediately determined. However, it could be that the hover sensor 175 on the back of the device has a stronger signal than a hover sensor 175 on the front of the device, and a decision might have to be made that the location is more likely on the back of the device. Similarly, with a grid sensor, there may be a range of strengths for outputs, and a decision could be made through known techniques as to a location for an object.

It is noted there may be some coordination between blocks 510 and 520. This coordination is illustrated by block 517 as "trigger other block", as one block 510/520 could trigger the other block 520/510. In an exemplary embodiment, for instance, the acoustic signal 140 from the microphone 145 is used to detect the touch or sound command. Once the touch or sound command has been detected, the device checks where the user hands were using, e.g., the hover sensor 175. In this example, at least the microphone should be on all the time. Typically, so would be the hover sensor 175 (or touch sensor 170), but in many cases it is enough to quickly check after the touch has been detected where the user hands are right after the touch. This example is merely illustrative and other coordination may be used, such as having block 520 trigger the block 510 (e.g., to fix a time when a sound command should start).

As a more specific example of block 517, in block 580, the mobile device 100/200 determines a (e.g., an exact) moment the acoustic signal 140 from the microphone exceeds a threshold. Responsive to this determination, the mobile device 100/200 in block 585 performs analyses around the moment the acoustic signal exceeded the threshold. That is, the mobile device causes (in block 590) the acoustic signal recognition (block 510) and determination of one or more attributes of the acoustic signal (block 570) to be performed. Additionally, the mobile device causes (in block 595) direction analysis for an object (block 520) to be performed. Blocks 590 and 595 may occur one after the other or simultaneously, although simultaneously can be beneficial (depending on the system) to reduce latency. The location is detected using touch or hover sensor(s) and the attribute(s), e.g., timbre, of the sound/vibration signal are determined "around" the moment when the threshold was exceeded is compared to the signals in the database. That is, block 530 is also performed, as will block 540. Typically, "around" the moment means starting 100ms (milliseconds) before the moment and ending 500ms after the moment. However, it should be noted that the time limits are related to how quickly a user may repeat a gesture. For example, snapping fingers may probably occur at most four times a second. Therefore, for an acoustical signal that is a result of snapping, there is a quarter of a second time window from which the audio signal belongs rather exclusively to a single gesture. For different gestures, the time window may be of a different length. Also, an optimal centering of the time window may depend on the gesture. Thus, the 100ms before and 500ms after the moment are merely exemplary and may change depending on the gesture. For instance, an initial "large" window (e.g., 500ms before and 500ms after the moment) may be chosen until a gesture (such as "tap" or "snap") is determined, then the window size may be adjusted to a smaller window corresponding to the gesture. Thus, a window for a snap could be 250ms wide and centered 75ms from the moment, while a window for a tap could be 500ms wide and centered 150ms from the moment.

The examples provided above use an object of a hand 250 or fingers 251. However, the object could also be a pencil, an eraser, a glove, a stylus, a pen, and the like, e.g., depending on the ability to sense the object by the location sensor(s) 171. For instance, a hover sensor 175 may have a limited number of objects that can be sensed, while the touch sensor could have many additional objects (e.g., any object able to press down a contact).

The acoustic signal and direction database provides input to blocks 510 and 530. In block 530, the mobile device 100/200 compares the recognized acoustic signal 197 and the analyzed direction 198 (e.g., or the set of attributes 199 and the sets of attributes 146) to entries in the acoustic signal and direction database 120. The entries are, in an exemplary embodiment as illustrated in FIG. 1, pairs 126, each of which comprises an acoustic signal 127 (e.g., or sets of attributes 146) and a direction 128. In block 540, the mobile device 100/200 controls an operation in response to the recognized acoustic signal 197 and the analyzed direction 198 matching an entry (e.g., corresponding elements in a pair 126) in the database 120. Such operations are any operation that may be controlled by an electronic device, including, e.g., modifications of audio or video (such as pausing, playing, stopping playback, and the like), and modifications of operating system function, such as launching an application, closing an application, and the like.

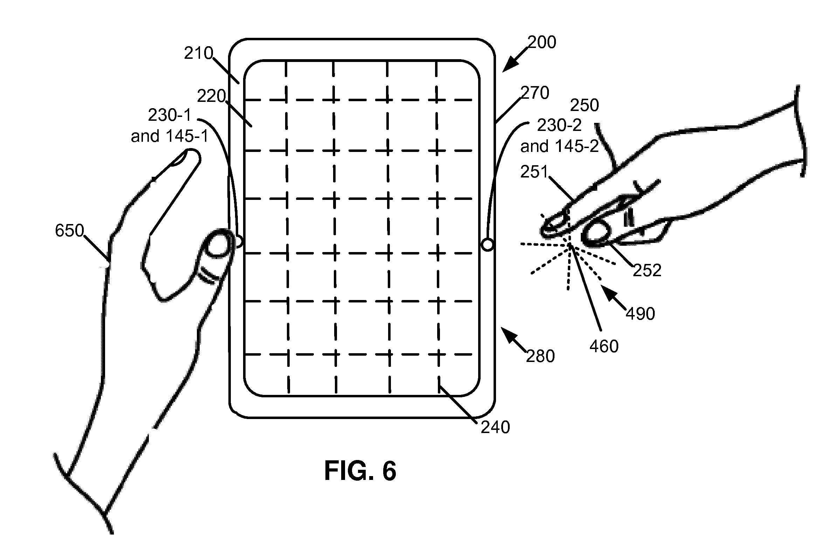

The examples above used a single microphone 145. However, multiple microphone examples are also possible. FIG. 6 illustrates such an example, where a user is making a sound near but not touching a mobile device. FIG. 6 is similar to FIG. 4, but the techniques for FIG. 6 may be applied to FIGS. 3 and 4 also. When the device 200 detects using a hover sensor 240 that a user is, e.g., holding the device 200 with his left hand 650 and giving sound commands with his right hand 250, the device uses a microphone 145-2 in the microphone area 230-2 on the right side 270 to detect the sound command. A microphone 145-2 on the right side 270 is not as likely to be covered by the left hand 650 that is holding the device. If the user is holding the device with his right hand 250, then the left side 272 microphone 145-1 (in microphone area 230-1) is used.

In terms of the embodiments using touch sensors, the following examples are additionally provided.

A) Instead of detecting events and their time only based on the audio, one could detect events based on both audio and touch input.

B) In large displays, for instance, a possible distance is large between the touch location and the microphone, which may be problematic. This is because a) the audio may change during the time the audio travels and b) because the time windows in which the audio attributes occur and touch attributes occur are different. Touch input occurs first then sound waves travel to the microphone, where the audio signal arrives to the system with a delay and then audio attribute(s) is/are determined.

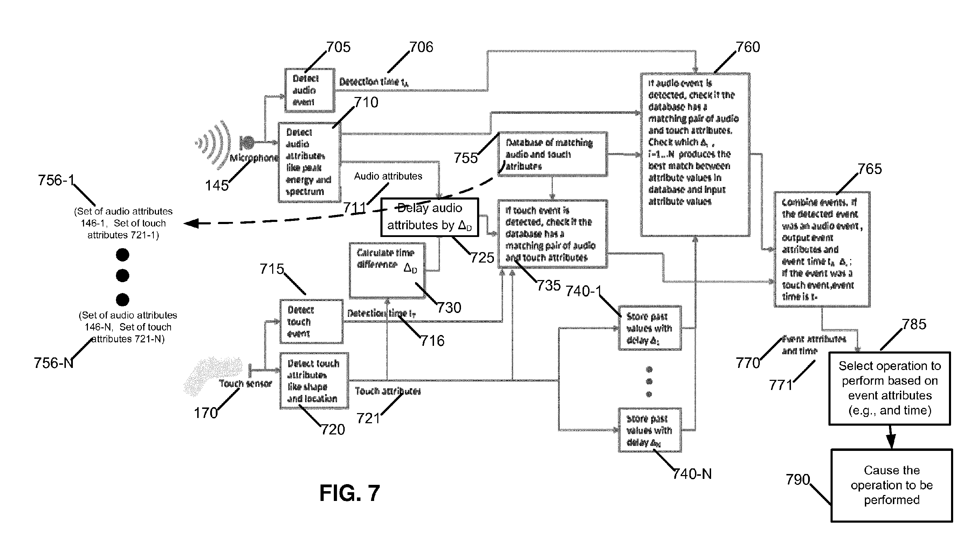

A possible implementation that would effectively comprise both touch detection and audio signal determination is illustrated by FIG. 7. Therefore this system allows the detection based on both audio and touch input by taking into account the time delay issue. Turning to FIG. 7, this figure is a block diagram of an example using a combination of touch and sound. This figure is also an exemplary logic flow diagram that illustrates the operation of an exemplary method, a result of execution of computer program instructions embodied on a computer readable memory, and/or functions performed by logic implemented in hardware, in accordance with exemplary embodiments herein. The blocks in FIG. 7 may also be considered to be interconnected means for performing the functions in the blocks. Furthermore, each block in FIG. 7 may be implemented as a module, such as a circuit or other hardware, for performing the function in the block. For instance, the block 735 may be a module, such as a circuit, configured to check, if a tough event is detected, if the database has a matching pair of audio and touch attributes. FIG. 7 can be considered to be a more specific version of FIG. 5. Further, the blocks in FIG. 7 may be considered to be an exemplary implementation of user interaction control unit 135. Thus, mobile device 100/200, e.g., under control of the user interaction control unit 135, performs the blocks in FIG. 7.

In block 705, the mobile device detects the audio event and outputs the detection time, *t_{A},* 706. In block 710, the mobile device detects the audio attributes like peak energy and spectrum as non-limiting examples. The audio attributes 711 are communicated to block 760. In block 760, the mobile device, if an audio event is detected, checks if the database 755 has a matching pair of audio and touch attributes. That is, it is checked which Δ*ᵢ*, i = 1...N, produces the best match between attribute values in the database and the input attribute values. In equations, the values used could be as follows: *t_{A}* - Δ₁, *t_{A} -* Δ₂,..., *t_{A} -* Δ*_{N}.* That is, block 760 starts at a detection time (e.g., *t_{A}*) for the audio event and looks for a touch event in the past (times prior to *t_{A}*). As such, delays are subtracted from the audio detection time, *t_{A}.* If Δ₁ ≠ 0, the value at *t_{A}* may also be stored. Note that the audio attributes are fixed at *t_{A},* but the touch attributes are sampled at the times *t_{A}* - Δ₁, *t_{A} -* Δ₂,..., *t_{A} -* Δ*_{N}.* The database 755 provides at least an input to blocks 760 and 735 and includes N entries 756-1 through 756-N. Each entry 756 includes a set of audio attributes 146 and a set of touch attributes 721. Each "set" is at least one attribute.

In block 715, the mobile device detects a touch event 715 and outputs a detection time, *t_{T},* 716. In block 720, the mobile device detects touch attributes like shape and location as non-limiting examples. The touch attributes 721 are output to blocks 735 and 740. In block 730, the mobile device calculates the time difference Δ*_{D}*, which is the time difference it takes for audio to arrive from the touch location to the microphone. Typically, Δ*_{D}* is a distance between touch location and microphone divided by the speed of sound. In block 725, the audio attributes are delayed by Δ*_{D}*. The audio attributes are calculated in time windows. The time windows start at different times and the windows may overlap (for example 20ms long windows with 50 percent overlap). The time difference Δ*_{D}* describes the different start times of the windows. That is, the window(s) used may start at least at the time *t_{T}* + Δ*_{D}.* Each window typically has its own set of attributes. In particular, the recognizing the attribute(s) may be performed using a microphone signal captured based on the time difference Δ*_{D}*.

In block 735, the mobile device, if a touch event is detected, checks if the database 755 has a matching entry (e.g., pair) 756 of audio and touch attributes. Block 735 can entail comparing the one or more attributes of the touch at the touch detection time and audio attributes determined using a window of microphone signal information delayed from the touch detection time by a time difference (e.g., Δ*_{D}*). It is also possible to recognize the one or more attributes of the acoustic signal using a microphone signal captured using time windows starting at a point based at least in part on the time difference and progressing from this point. For instance, this could be used if the time difference (e.g., Δ*_{D}*) is not exactly known, such that multiple windows of microphone information can be used. Each of the combination of the attribute(s) of the touch event and the attribute(s) of the audio event at the different windows can be compared with pairs of touch and audio attributes in the database 755.

In blocks 740, the mobile device stores past values with delays Δ₁ (block 740-1) through Δ*_{N}* (block 740-N). That is, the touch attributes 721 are stored at various delays Δ₁ (block 740-1) through Δ*_{N}* (block 740-N). Note that the touch attributes 721 may change over time. For instance, the touch attributes stored at delay Δ₁ may be different from the touch attributes stored at delay Δ*_{N}*. Similar to audio that is analyzed based on time windows, time windows may also be used to determine touch attributes 721, such that the touch attributes 721 are determined per time window and each time window corresponds to a delay. That is, determining the one or more attributes for a touch occurs using the information from the touch sensor at the touch detection time, and for information from the touch sensor at a plurality of delays from the touch detection time to the touch detection time plus the time difference. In equations the values stored would be as follows: *t_{T}* + Δ₁, *t_{T}* + Δ₂ ,..., *t_{T}* + Δ*_{N}*. If Δ₁ ≠ 0, the value at *t_{T}* may also be stored. Overlap of windows may or may not be used for the windows used to determine touch attributes.

Blocks 735 and 760 output audio and touch attributes and times 706, 716, respectively, to block 765. Block 765 includes combining the events. If the detected event was an audio event, the event attributes 770 and time 771 are output. The event time 771 is *t_{A} -* Δ*ᵢ.* If the event was a touch event, the event time is *t_{T}.* Note that only one of the touch or audio events might be detected or both could be detected.

A simple explanation for the embodiment in FIG. 7 is as follows: If audio level goes above a threshold, an audio event is detected. If the touch screen is touched, a touch event is detected. If an audio event was detected, audio attributes from the moment of the event (*t_{A}*) are compared to touch attributes starting from before the audio event occurred based on *t_{A}-*Δ*ᵢ.* Different values for Δ*ᵢ* can be tried because one does not know the location of the touch and therefore one does not know the delay that audio travels from touch location to the microphone.

If a touch event was detected, touch attributes from the moment of the touch event (*t_{T}*) are compared to audio attributes starting from after the touch event occurred, *t_{A}*-Δ.

Different attributes can be stored in the database 755 depending on the touch location because audio changes when the audio travels far, i.e. the audio signal level attenuates when audio goes far. This is probably only important when the display size is 32 inches or so, but with table top displays this kind of exemplary embodiment would be significant.

Additionally, sometimes detecting the touch or audio event does not work because the detection typically has a threshold the event must exceed to be detected and sometimes the event does not exceed the threshold. In such case, the mobile device may only detect the audio part or the touch part of the event. However, if, for example, the audio part did not exceed the threshold, when the mobile device detects the touch event, the mobile device determines that there must have been an audio event and the mobile device may lower the threshold for the audio event and check the audio again.

Also, there may be events for which both audio and touch exceeded the threshold and events where only audio or touch exceeded the threshold. Combining the events in block 765 means that all three types of events are output similarly because for the rest of the system it does not matter how the event was detected. Instead, the event parameters are output regardless of how the parameters were accumulated. If both the audio and the touch are detected, typically, the audio event time is used and the touch event time is discarded. Even in cases when the audio event has not exceeded the threshold, one may calculate from the touch event time when the audio event should have approximately occurred (e.g., using the time it takes sound to travel from the touch event location to the microphone) and then search for the maximum value in the audio signal within a search window (e.g., typically 200ms before and after the estimated time). Then, one may take the time of the maximum value within the search window to be the audio event time. The achieved audio event time can then be used in place of the touch event time because the audio event time is more accurate.

The output event attributes 770 can be used to select an operation 129 based on the event attributes 770, e.g., and based on the time 771. See block 785. For instance, if a video was being played, and the operation 129 is to pause the video, the video could be "rewound" and paused at the time 771. In block 790, the mobile device causes the operation to be performed, e.g., by an application, operating system, and the like.

The exemplary embodiment in FIG. 7 can be adapted for hover if one assumes that the display is really long and/or wide compared to the distance from which hover is detected above the display.

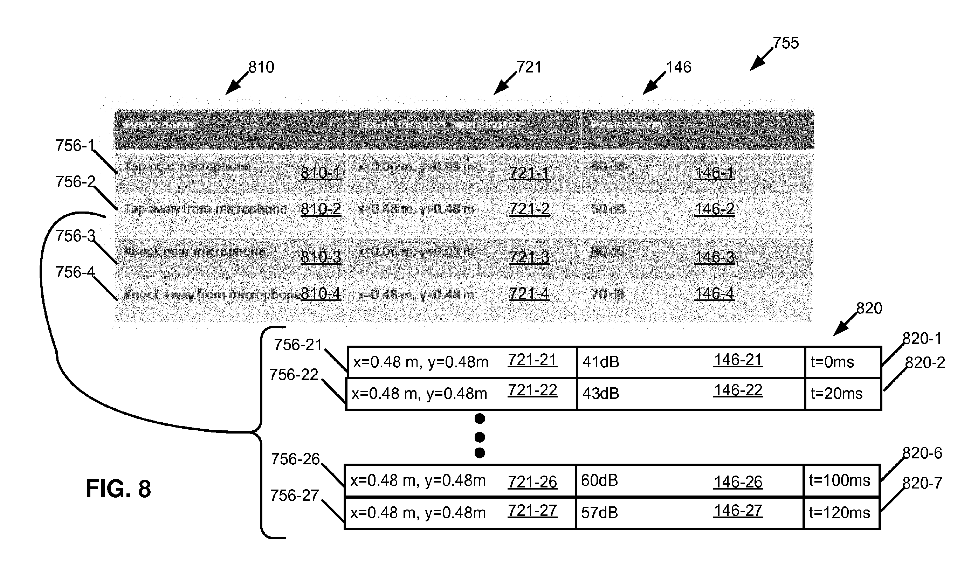

Turning to FIG. 8, this shows an example database 755 that only has a location attribute for touch and peak energy for audio. The entries 756-1 through 756-4 include event names 810-1 through 810-4, sets of touch location coordinates 721-1 through 721-4, and peak energies 146-1 through 146-4 in this example. The touch attribute 721 is a set of touch location coordinates. The audio attribute 146 is peak energy, in decibels (dB). The touch events 721 are characterized by the event names, such as "tap near microphone" 810-1, "tap away from microphone" 810-2, "knock near microphone" 810-3, and "knock away from microphone" 810-4. Blocks 760 and 735 would select one of these entries 756 based on the sets of touch location coordinates 721 and the peak energy 146, and the selected entry 756 (e.g., at least 721 and 146) would be output as event attributes 770 along with a time 771.

The examples in entries 756-1 through 756-4 are simple and do not show any time dependency. However, time dependency could be added as is illustrated by entries 756-21, 756-22, 756-26, and 756-27, which correspond to entry 756-2. The time dependency is shown as delays 820: 820-1 of 0ms (milliseconds); 820-2 of 20ms; 820-6 of 100ms; and 820-7 of 120ms. In this example, the touch attributes 721 and the audio attributes 146 are sampled based on time windows of 20ms. The peak energy as the audio attribute 146 starts at 41dB (146-21), increases to 43dB (146-22) at 20ms, reaches a highest level of 60dB (146-27) at 100 ms, and then begins to decrease, becoming 57dB (136-7) at 120ms. In this example, the touch attributes 721 do not vary, but this is merely exemplary. For instance, shape of the touch could vary over time. There could also be additional or fewer entries 756 for such a table.

Without in any way limiting the scope, interpretation, or application of the claims appearing below, a technical effect of one or more of the example embodiments disclosed herein is to allow a user to command a mobile device or applications thereon using sounds or vibrations. Another technical effect is to allow a user ability to interact with a mobile device using sounds. Advantages and other technical effects include one or more of the following: exemplary embodiments provide more robust detection in the presence of noisy acceleration; exemplary embodiments provide more robust detection in the presence of noisy background sounds; and the exemplary embodiments provide more flexibility for user interaction.

Additional exemplary embodiments are as follows. Example 1. An apparatus, comprising: means for sensing a location and for outputting corresponding one or more signals and means for sensing audio configured to form corresponding audio signals. The apparatus also includes the following: means for determining, using the one or more signals from the means for sensing a location, a direction of at least one object relative to the apparatus; means for recognizing, by the apparatus using a signal from the means for sensing audio in the apparatus, one or more attributes of an acoustic signal made by the at least one object; and means for causing an operation to be performed by the apparatus in response to the direction and the recognized one or more attributes being determined to correspond to the operation.

Example 2. The apparatus of example 1, wherein the acoustic signal comprises a sound and the means for recognizing the one or more attributes of the acoustic signal further comprises means for recognizing one or more attributes of the sound.

Example 3. The apparatus of example 1, wherein the acoustic signal comprises vibrations and the means for recognizing the one or more attributes of the acoustic signal comprises means for recognizing one or more attributes of the vibrations.

Example 4. The apparatus of example 1, wherein the at least one object comprises a finger or hand of a user. Example 5. The apparatus of example 1, wherein the at least one object comprises at least one of a pencil, an eraser, a glove, a stylus, or a pen.

Example 6. The apparatus of example 1, wherein the means for sensing a location comprises one or more location sensors.

Example 7. The apparatus of example 1, wherein the means for sensing a location comprises one or more touch sensors.

Example 8. The apparatus of example 1, wherein the acoustic signal comprises at least one of vibrations and sound generated by contact of the at least one object on the mobile device.

Example 9. The apparatus of example 1, wherein the acoustic signal comprises sound made by the at least one object, where the at least one object does not contact the mobile device when making the sound.

Example 10. The apparatus of example 1, wherein the apparatus further comprises: means for comparison of the one or more attributes and the determined direction with pairs of entries in a database, each pair comprising one or more attributes and a direction; means for matching the one or more attributes and the determined direction with a pair in the entries; and means for determination of an operation corresponding to the pair.

Example 11. The apparatus of example 1, further comprising means for determination of a moment a signal from a microphone exceeds a threshold; means for causing, responsive to the determination of the moment the signal from the microphone exceeds the threshold, performance of the determination of the direction and performance of the recognition of the one or more attributes of the acoustic signal made by the at least one object.

Example 12. The apparatus of example 11, wherein the means for sensing a location comprises at least one hover sensor and the means for determination of the direction uses information from the at least one hover sensor.

Example 13. The apparatus of example 11, further comprising means for performing, by starting a first number of milliseconds before the moment and ending a second number of milliseconds after the moment, the determination of the direction and the recognition of the one or more attributes of the acoustic signal made by the at least one object.

Example 14. The apparatus of example 13, wherein the means for sensing a location comprises at least one hover sensor and the means for determination of the direction uses information from the at least one hover sensor.

Example 15. The apparatus of example 1, wherein:

the means for determination of the direction of the at least one object relative to the apparatus further comprises means for determination, using information from a touch sensor, one or more attributes of a touch by the at least one object on the apparatus;

the apparatus further comprises: means for comparison of the one or more attributes of the touch and the one or more attributes of the acoustic signal with attributes of touch and attributes of acoustic signals in a database in order to determine a match;

the means for causing an operation to be performed further comprises means for causing the operation to be performed based on the determined match.

Example 16. The apparatus of example 15, wherein:

the means for determination, using information from a touch sensor, of one or more attributes of a touch by the at least one object on the apparatus is performed responsive to a determination a touch event has been detected, and the means for determination of the one or more attributes for a touch is performed using information from the touch sensor at a touch detection time; and

the means for comparison of the one or more attributes of the touch and the one or more attributes of the acoustic signal further comprises means for comparison of the one or more attributes of the touch at the touch detection time and audio attributes determined by processing microphone signal information delayed from the touch detection time by a time difference with attributes of touch and attributes of acoustic signals in the database in order to determine the match.

Example 17. The apparatus of example 16, further comprising:

means for calculation of the time difference based on a difference between a location on the apparatus of the touch and a microphone used to recognize the one or more attributes of the acoustic signal;

means for performance of the recognition of the one or more attributes of the acoustic signal using a microphone signal captured using time windows starting at a point based at least in part on the time difference and progression from this point; and

means for performance of the comparison of the one or more attributes of the touch at the touch detection time and the one or more attributed determined with each window with pairs of touch and audio attributes in the database.

Example 18. The apparatus of example 16, wherein:

the means for determination of the one or more attributes for a touch occurs using the information from the touch sensor at the touch detection time and for information from the touch sensor at a plurality of delays from the touch detection time to at least delays from the touch detection time to the touch detection time plus the time difference.

Example 19. The apparatus of example 15, wherein:

the means for determination, using information from a touch sensor, of one or more attributes of a touch by the at least one object on the apparatus is performed responsive to a determination an audio event has been detected;

the apparatus further comprises:

means for determination, in response to detecting the audio event, of an audio detection time;

means for comparison of the one or more attributes of the touch and the one or more attributes of the acoustic signal further comprises comparison of attributes of touch determined at a plurality of delays delayed from the audio detection time into past times and attributes of the acoustic signal with attributes of touch and attributes of acoustic signals in the database in order to determine the match.

Example 20. The apparatus of example 15, wherein:

the apparatus further comprises:

means for determination, in response to a touch event being detected, of a touch detection time;

means for determination, in response to an audio event being detected, of an audio detection time,

wherein only one of a touch event or an audio event is detected and either a touch detection time or an audio detection time is determined; and

the means for causation of the operation to be performed by the apparatus is based on the determined match and based on either the determined touch detection time or the determined audio detection time.

Embodiments of the present invention may be implemented in software, hardware, application logic or a pair of software, hardware and application logic. In an exemplary embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with examples of computers described and depicted. A computer-readable medium may comprise a computer-readable storage medium that may be any media or means that can contain or store the instructions for use by or in connection with an instruction execution system, apparatus, or device, such as a computer. The computer-readable storage medium does not, however, encompass propagating signals.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other pairs of features from the described embodiments and/or the dependent claims with the features of the independent claims, and not solely the pairs explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

## Claims

1. An apparatus, comprising:
one or more microphones configured to form corresponding microphone signals;
one or more location sensors configured to output one or more signals in such a way that the apparatus determines at least the following:
using the one or more signals from the one or more location sensors, of a direction of at least one object relative to the apparatus;
using a signal from the one or more microphones, one or more attributes of an acoustic signal made by the at least one object; and in response to the determined direction and the one or more attributes
cause of an operation.

2. The apparatus as claimed in claim 1, wherein the acoustic signal comprises at least one of:
a sound and the one or more attributes of the acoustic signal is being determined comprises recognition of one or more attributes of the sound; and
vibrations and the one or more attributes of the acoustic signal is being determined comprises recognition of one or more attributes of the vibrations.

3. The apparatus as claimed in any preceding claim, wherein the at least one object comprises at least one of:
a finger;
hand of a user;
a pencil;
an eraser;
a glove;
a stylus; and
a pen.

4. The apparatus as claimed in any preceding claim, wherein the one or more location sensors comprises at least one of:
one or more hover sensors; and
one or more touch sensors.

5. The apparatus as claimed in any preceding claim, wherein the acoustic signal comprises one of:
at least one of vibrations and sound generated by contact of the at least one object on the apparatus; and
sound made by the at least one object, where the at least one object does not contact the apparatus when making the sound.

6. The apparatus as claimed in any preceding claim, wherein the cause of the operation comprises at least one of:
comparison of the one or more attributes and the determined direction with pairs of entries in a database, each pair comprising one or more attributes and a direction;
match the one or more attributes and the determined direction with a pair in the entries; and
determination of an operation corresponding to the pair.

7. The apparatus as claimed in any preceding claim, wherein the apparatus further:
determines of a moment in the signal from the microphone when exceeding a threshold; and
in response to the determination of the moment in the signal from the microphone when exceeding the threshold, determines the direction and the one or more attributes of the acoustic signal made by the at least one object.

8. The apparatus as claimed in claim 7, wherein the one or more location sensors comprise at least one hover sensor and determination of the direction uses information from the at least one hover sensor.

9. The apparatus as claimed in claim 7, wherein the apparatus further configured to perform at least the following: performance, by starting a first number of milliseconds before the moment and ending a second number of milliseconds after the moment, of the determination of the direction and the one or more attributes of the acoustic signal made by the at least one object.

10. The apparatus as claimed in any preceding claim, wherein:
determination of the direction of the at least one object relative to the apparatus further:
determines, using information from a touch sensor, one or more attributes of a touch by the at least one object on the apparatus;
compares of the one or more attributes of the touch and the one or more attributes of the acoustic signal with attributes of touch and attributes of acoustic signals in a database in order to determine a match; and
causes an operation to be performed based on the determined match.

11. The apparatus as claimed in claim 10, wherein the apparatus further:
determines, using information from a touch sensor, of one or more attributes of a touch by the at least one object on the apparatus is performed responsive to a determination of a touch event has been detected, and determination of the one or more attributes for a touch is performed using information from the touch sensor at a touch detection time; and
compares the one or more attributes of the touch and the one or more attributes of the acoustic signal further comprises a comparison of the one or more attributes of the touch at the touch detection time and audio attributes determined by processing microphone signal information delayed from the touch detection time by a time difference with attributes of touch and attributes of acoustic signals in the database in order to determine the match.

12. The apparatus as claimed in claim 11, wherein the apparatus is further configured to perform at least one of:
calculation of the time difference based on a difference between a location on the apparatus of the touch and a microphone used to recognize the one or more attributes of the acoustic signal;
performance of the recognition of the one or more attributes of the acoustic signal using a microphone signal captured using time windows starting at a point based at least in part on the time difference and progression from this point; and
performance of the comparison of the one or more attributes of the touch at the touch detection time and the one or more attributed determined with each window with pairs of touch and audio attributes in the database.

13. The apparatus as claimed in claim 11, wherein:
determination of the one or more attributes for a touch occurs using the information from the touch sensor at the touch detection time and for information from the touch sensor at a plurality of delays from the touch detection time to at least delays from the touch detection time to the touch detection time plus the time difference.

14. The apparatus as claimed in claim 10, wherein:
determination, using information from a touch sensor, of one or more attributes of a touch by the at least one object on the apparatus is performed responsive to a determination of an audio event has been detected; and
determination, in response to detecting the audio event, of an audio detection time further comprises a
comparison of the one or more attributes of the touch and the one or more attributes of the acoustic signal in such a way that attributes of touch determined at a plurality of delays delayed from the audio detection time into past times compared to attributes of the acoustic signal with attributes of touch and attributes of acoustic signals in the database in order to determine the match.

15. The apparatus as claimed in claim 10, wherein the apparatus further:
determines, in response to a touch event being detected, of a touch detection time;
determines, in response to an audio event being detected, of an audio detection time,
wherein only one of a touch event or an audio event is detected and either a touch detection time or an audio detection time is determined; and
causes the operation to be performed by the apparatus is based on the determined match and based on either the determined touch detection time or the determined audio detection time.
